(19) Europäisches Patentamt
European Patent Office
Office européen des brevets

(11) **EP 3 256 720 B1**

(12) **EUROPEAN PATENT SPECIFICATION**

(45) Date of publication and mention
of the grant of the patent:
**20.03.2019 Bulletin 2019/12**

(51) Int Cl.:
*F03D 7/06* *(2006.01)*    *F03D 3/00* *(2006.01)*
*F03D 3/06* *(2006.01)*    *F03D 1/06* *(2006.01)*

(21) Application number: **16707962.3**

(22) Date of filing: **08.02.2016**

(86) International application number:
**PCT/IB2016/050647**

(87) International publication number:
**WO 2016/128879 (18.08.2016 Gazette 2016/33)**

(54) **TURBINE FOR VERTICAL AXIS WIND GENERATOR.**

TURBINE FÜR WINDGENERATOR MIT VERTIKALER ACHSE

TURBINE POUR GÉNÉRATEUR ÉOLIEN À AXE VERTICAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.02.2015 IT BO20150063**

(43) Date of publication of application:
**20.12.2017 Bulletin 2017/51**

(73) Proprietor: **Energietiche s.r.l.**
**47924 Rimini (IT)**

(72) Inventors:
• **CIMATTI, Carlo Alberto**
**47121 FORLI (Forli Cesena) (IT)**

• **MARIAN, Daniele**
**48122 Ravenna (IT)**

(74) Representative: **Borsano, Corrado et al**
**Metroconsult S.r.l.**
**Foro Buonaparte, 51**
**20121 Milano (IT)**

(56) References cited:
**EP-A1- 1 681 463        EP-A2- 2 623 774
AT-U1- 10 992            US-A1- 2008 095 608
US-A1- 2012 243 990**

## Description

## Technical field

This invention relates to a turbine for a vertical axis wind turbine generator. The invention is applicable in the field of wind generators. The invention is also applicable in the field of turbomachinery and, in particular, in the field of wind turbines, which are machines designed to use the kinetic energy of moving air (that is, the kinetic energy of wind) to produce mechanical energy. This invention can be very advantageously applied to the field of micro wind generators, that is to say, wind generators having a power rating of less than 20 kW. More specifically, this invention addresses the field of self start, vertical axis wind turbines.

## Background art

Prior art wind turbines typically comprise a supporting structure and a rotor. The rotor comprises at least one blade, coupled to the supporting structure to rotate about an axis of rotation. Wind turbines can be broadly divided into horizontal axis wind turbines (also known by the abbreviation HAWT) and vertical axis wind turbines (also known by the abbreviation VAWT) according to whether the axis of rotation is parallel or perpendicular to the direction of wind incidence. More specifically, this description relates to a vertical axis wind turbine where the axis of rotation of the rotor is at right angles to the direction of wind incidence.

In VAWT turbines, the blades rotate about the axis of rotation (or central axis) which is parallel to a direction along which the elongate blades extend.

The aerodynamic power extractable from an air flow (that is, from the wind) is given by the relation

$$P = \frac{1}{2} \rho_a C_p S v^3,$$

where:

- $\rho_a$ is the density of the air;
- $C_p$ is the power coefficient, the parameter that quantifies the aerodynamic efficiency, that is, the ratio between the mechanical power which the turbine is capable of producing and the power associated with the wind;
- S is the equivalent surface swept by the turbine blades;
- $v$ is wind speed.

More specifically, the power coefficient depends on what is known as the "tip speed ratio" (hereinafter referred to by the abbreviation "TSR") and on the geometrical parameters of the turbine.

The TSR is a parameter which indicates the ratio between the tangential speed of the blade at a point distal from the axis of rotation, and the speed of the wind. Considering wind speed and rotor radius to be constant, the TSR depends uniquely on the rotation speed of the rotor.

Typically, the function which describes the power coefficient curve as a function of the TSR has an absolute maximum.

The dependence of the power coefficient on the geometrical characteristics of the rotor is usually expressed as a function of a known parameter such as solidity defined as the ratio between the surface of the turbine blades and the equivalent surface swept by the blades.

Typically, to increase the TSR value which gives the maximum power coefficient, wind turbines must be low solidity. A low solidity wind turbine is more efficient because its power coefficient does not vary greatly around the TSR value which maximizes it. In other words, for low solidity values, the turbine is capable of operating efficiently even for TSR values which differ from the TSR value which maximizes the power coefficient. High solidity turbines, on the other hand, are more sensitive to TSR variations. The maximum value of the power coefficient for vertical axis turbines is situated at relatively low TSR values (typically less than 6) compared to horizontal axis turbines. The maximum efficiency of vertical axis turbines is obtained at lower rotational speeds than horizontal axis turbines. Vertical axis turbines are thus more silent.

An example of a vertical axis wind turbine is described in patent document WO2011078451 which discloses a vertical axis turbine whose operation is based on the principle of lift. Turbines of this kind, also known as Darrieus turbines are typically low solidity and are therefore configured to maximize efficiency at high rotational speeds.

These turbines suffer from considerable, particularly serious problems when starting. Prior art Darrieus turbines, whose rotor is characterized by low torque values, are not usually capable of self starting except under conditions of high wind speed. It is often necessary to provide these turbines with a starting device configured to bring the rotor to a predetermined minimum speed which allows it to start operating.

Also known from the prior art are vertical axis turbines whose operation is based on the principle of drag and typically known as Savonius turbines. An example of a drag wind turbine is described in patent document WO2011150171.

These turbines typically comprise a pair of half cylinders (or scoops) fixed to a supporting shaft and mounted opposite each other: a first half cylinder (or active blade) is mounted with its concavity facing towards the wind, whilst a second half cylinder (passive blade) is mounted with the convex part facing towards the wind (that is, it moves against the wind). Typically, the half cylinders are offset in a direction perpendicular to the axis of rotation to allow a part of the air flow to pass from the concavity of the active blade to the concavity of the passive blade, thus increasing the efficiency of the turbine.

Savonius turbines have high torque and are self-starting. The maximum power coefficient of these turbines, however, is lower than the maximum power coefficient obtainable with a Darrieus turbine of similar size. Moreover, the power coefficient of these turbines reaches its maximum for TSR values less than 1, thus obliging designers to dimension the turbine for low rotational speeds. To obtain high power outputs, therefore, it is necessary to increase the size of the turbine, which means increasing costs and footprint.

Savonius turbines have high solidity values and are therefore characterized by considerable variations of efficiency around the TSR value which maximizes the power coefficient.

Prior art wind turbines also comprise hybrid solutions. For example, patent document WO2013136660 describes a Darrieus turbine comprising a starting device consisting of a Savonius turbine keyed to the supporting shaft. The Savonius turbine allows rotation of the rotor during starting until the rotational speed is high enough to enable operation of the Darrieus turbine.

Also known from the prior art are electrical starting devices - for example, electric starter motors - configured to bring the rotor to a rotational speed which is high enough for the Darrieus turbine to come into operation.

These solutions are extremely expensive, both in terms of manufacturing, since they complicate turbine design and production, and in terms of running costs, since they considerably increase maintenance costs.

Other examples of wind turbines are described in patent documents EP2623774A2, AT10992U1, US2012/243990A1, US2008/095608A1, EP1681463A1, GB2427003A and WO2011/105970A1.

EP2623774A2 relates to a wind turbine (called "biplane") having a first and a second blade positioned on different circles relative to the central axis of rotation of the turbine: an inner blade and an outer blade. In this solution, the inner blade is oscillating by means of a device which acts in response to the inertial (centrifugal) forces associated with the rotation of the turbine.

The document does not, however, provide a solution as to how to facilitate turbine starting from standstill even in the case of only one blade or in the case of a pair of opposed blades.

AT10992U1 shows a tilting aileron combined with a fixed blade but in this case, too, the aileron is not located along the same operating trajectory as the blade but is offset towards the outside, partly overlapping the blade. Thus, the solution provided by AT10992U1 also fails to bring any particular benefit to the starting of turbines with a single blade or with two diametrically opposed blades.

## Disclosure of the invention

This invention has for an aim to provide a turbine for a vertical axis wind turbine generator and a method for using the turbine which overcome the above mentioned drawbacks of the prior art.

This aim is fully achieved by the turbine of this invention as characterized in the appended claims.

This description provides a turbine for a vertical axis wind turbine generator which is particularly simple and economical.

This description provides a turbine for a vertical axis wind turbine generator which is particularly efficient and reliable.

This description provides a turbine for a vertical axis wind turbine generator and a method for using the turbine which facilitate turbine starting even in the case where the turbine has a single blade or a pair of opposed blades.

The turbine for a vertical axis wind turbine generator according to this description comprises a supporting structure rotating about a central axis. In an example embodiment, the supporting structure comprises a supporting shaft and at least one supporting arm.

The turbine comprises at least one blade which is elongate in a longitudinal direction, operatively parallel to the central axis.

In an example embodiment, the at least one blade is curved. In other words, the turbine is a curved blade turbine. In such case, the longitudinal length of the blade is defined by the extension of the blade in a direction parallel to the central axis.

It should be noted that the turbine of this description is a VAWT, where the central axis is parallel to the direction along which the elongate blades extend.

It should be noted that this description is not limited to the case where the central axis is parallel to the weight force. In effect, the central axis may be spatially oriented in an arbitrary direction. Thus, the expression "vertical axis" referred to the type of turbine must not be deemed as limiting with regard to the orientation of the turbine axis.

The at least one blade is connected to the supporting structure to rotate about the central axis along an operating trajectory in a rotation direction. Preferably, the at least one blade is connected to the supporting shaft by the supporting arm.

The at least one blade comprises a wing having an aerofoil defining a head and a tail wherein the head leads the tail in the rotation direction. Thus, as it moves along the operating trajectory, the head of the wing describes a cylindrical reference surface.

In an example embodiment, the at least one blade comprises a deflector having an aerofoil defining a head and a tail wherein the head leads the tail in the rotation direction. The deflector is located along the operating trajectory with its tail proximal to the head of the wing. The deflector is configured to oscillate about a tilt axis which passes through the head of the deflector and is perpendicular to a plane containing an aerofoil of the deflector. The tilt axis is parallel to the longitudinal direction of the blade. Preferably the deflector is idly pivoted on the supporting structure so as to oscillate about the tilt axis. Still more preferably, the deflector is oscillating about the tilt axis between a first and a second predetermined angular end-of-stroke position.

It should be noted that the deflector is located along the operating trajectory in the sense that the deflector (that is, the tilt axis) is located on the cylindrical reference surface. In other words, the head of the deflector is located substantially at the same distance from the central axis as the head of the wing.

The distance of the tail of the deflector from the central axis varies as a function of the angular position of the deflector because the deflector oscillates about the tilt axis, which is parallel to the central axis.

When the deflector is at the first angular end-of-stroke position, the tail of the deflector is located on a cylindrical surface on the outside of the cylindrical reference surface in which the head of the wing is located. When the deflector is at the second angular end-of-stroke position, the tail of the deflector is located on a cylindrical surface on the inside of the cylindrical reference surface in which the head of the wing is located. Between the first and the second angular end-of-stroke position, there is an (intermediate) alignment position where the tail of the deflector is located on the cylindrical reference surface.

During rotation of the blade about the central axis, the deflector moves alternately from the first to the second angular end-of-stroke position and vice versa.

It should be noted that the blade deflector (and this applies to each blade) moves from the first to the second angular end-of-stroke position and vice versa after each cycle (turn of the turbine), that is, after the turbine (hence the blade) turns full circle (360 degrees).

It should also be noted that (in an example embodiment in which the deflector is idle about the tilt axis and hence free to oscillate), the alignment position is an unstable, transient position which the deflector adopts instantaneously as it moves from the first to the second angular end-of-stroke position or vice versa.

It should be noted that in the example embodiment in which the turbine has a pair of diametrically opposed blades and hence a pair of wings and a corresponding pair of deflectors, the two deflectors in the pair, at each angular position of the turbine during the rotation of the blades about the central axis, have opposite angular positions relative to the oscillation about the respective tilt axes: if one is at the first angular end-of-stroke position, the other is at the second angular end-of-stroke position, and vice versa.

It should also be noted that the tail of the deflector is spaced from the head of the wing to define a gap between the deflector and the wing. That means that even at the alignment position, the tail of the deflector is spaced from the head of the wing so that the deflector and wing can move relative to each other to allow the deflector to move from the first to the second angular end-of-stroke position and vice versa.

It should be noted that this feature facilitates self starting of the turbine, even in the case where the turbine has a single blade or a (single) pair of opposed blades. The interaction between the wind and the deflector, which automatically adjusts its orientation according to the direction of incidence of the wind and the angular position of the blade, allows generating lift forces enabling the turbine to start.

Preferably, the turbine is configured to cancel (or, more in general, to significantly reduce) the effect of the inertial forces (centrifugal force) acting on the deflector, at least for turbine rotation speed values which are lower than a reference limit value.

In effect, there is a reference limit value for the (angular) speed of the turbine, exceeding which the turbine is at risk of breakdown, for example on account of cracking due to excessive mechanical stress. Above the reference limit speed, it is advisable to stop or at least slow down the turbine. Thus, during correct or nominal operation, the speed of the turbine goes from 0 (starting) to the reference limit value.

The turbine is thus configured to make the oscillation of the deflector independent of the effect of the inertial forces, at least during correct or nominal operation, that is to say, for turbine speed values of between zero and the reference limit value. In other words, the turbine is configured to make the oscillation of the deflector independent of the rotation speed of the machine (in the interval in which the turbine is recommended to operate).

The purpose of cancelling the inertial forces on the deflector is to facilitate starting of the turbine from standstill, allowing the deflector to freely adjust its orientation (even adopting the second angular end-of-stroke position) in response to the position of the deflector relative to the direction of the wind.

To cancel the inertial forces acting on the deflector, the turbine comprises a mechanical constraint (that is, mechanical constraining means) operating on the deflector to counteract the inertial forces resulting from the rotation of the deflector about the central axis as one with the corresponding turbine blade.

To cancel the inertial forces acting on the deflector, this description proposes three possible solutions, corresponding to features which may be used alternatively or in combination with each other.

In a first solution for cancelling the inertial forces acting on the deflector, the centre of mass of the deflector is located on the tilt axis of the deflector itself (balanced deflector). In this case, therefore, the mechanical constraint is defined by a weighting element located in the head of the deflector on the side of the tilt axis opposite to the tail of the deflector itself. In this example embodiment, therefore, the centre of mass of the deflector is located on the tilt axis. That way, the orientation of the deflector is not affected by centrifugal forces acting on it during turbine operation.

In a second solution for cancelling the inertial forces acting on the deflector where the turbine has at least a pair of opposed blades, the tails of the deflectors (of the opposed blades) are connected by a connecting element. In this case, therefore, the mechanical constraint is defined, for example, by the connecting element which connects the tails of the deflectors. This connecting element constitutes a synchronizing element whose function is to kinematically couple (synchronize) the rotation of the two deflectors about the respective tilt axes.

The connecting element has a nominal length corresponding to the distance between the tails of the two deflectors when the deflectors are located one at the first angular end-of-stroke position and the other at the second angular end-of-stroke position. The connecting element is inextensible. Alternatively, the connecting element is resistant to elongation to a degree such as to be inextensible for values of turbine rotation speed which are less than the reference limit value.

It should be noted that the inertial forces acting on the pair of opposed deflectors tend to move the deflector tails apart and thus tend to elongate the connecting element.

The connecting element is movable transversely to the central axis of rotation of the turbine to accompany the movement of the deflectors from the respective first and second angular end-of-stroke positions.

Thus, it should be noted that the deflectors are mechanically constrained to move together in their oscillation about the respective tilt axes, so that when one deflector passes from the first to the second angular end-of-stroke position, the other is constrained to pass from the second to the first angular end-of-stroke position.

In an example embodiment, the connecting element is provided with an elastic safety element which allows it to extend but only if the connecting element is acted upon by tensile forces whose values are greater than the tensile force generated on the connecting element when the turbine rotates at speeds greater than (or equal to) the reference limit value. For example, the connecting element has a middle segment comprising a (suitably calibrated) spring.

That way, the inertial forces are cancelled only for low, nominal speeds, whereas for (excessively) high speeds, at which the turbine would run the risk of breaking, the inertial forces acting on the deflectors are used (thanks to the spring in the connecting element) to allow the two deflectors of the pair to move apart, for example so that both move simultaneously to (or towards) the first angular end-of-stroke position (where the deflector tail is located on a cylindrical surface outside the reference cylindrical surface in which the head of the wing moves).

In a possible example embodiment, the connecting element comprises a first and a second rigid element connected to the respective deflectors of the pair of diametrically opposed deflectors. The first and second rigid segments are connected to each other by a flexible but inextensible element (for example, a rope of a cable). The flexible element of the connecting element allows the connecting element to rotate as one with the blades around the supporting structure (for example, a central shaft) of the turbine.

Preferably, the flexible element of the connecting element is interrupted by the elastic safety element (a spring for example) constituting the central segment which provides elasticity to the connecting element.

In an example embodiment, each deflector has at least one elastic end-of-stroke element (for example, one or two springs) which connect it (more specifically, connect the tail of the deflector) to a part of the turbine which is stationary relative to the oscillation of the deflector itself about its tilt axis. The function of these elastic elements is to limit the oscillation of the deflectors between the first and second angular end-of-stroke positions and/or to damp or reduce the impact between the deflector and corresponding mechanical end-of-stroke elements defining the first and second angular end-of-stroke positions (in order to reduce the noise of the turbine due to the continuous movement of the deflectors between the respective angular end-of-stroke positions).

In a third solution for cancelling the inertial forces acting on the deflector, the deflector is connected to an actuator (for example, an electric or linear motor or a jack) designed to rotate the deflector about its tilt axis. The actuator is driven by a control unit of the turbine. In this case, therefore, the mechanical constraint is defined by the actuator itself. In this solution, the angular positions of the deflectors around their tilting axes are controlled electronically as a function of a predetermined curve (profile) of deflector orientation (that is, of the angular positions of the deflectors around their tiling axes) as a function of the angular positions of the deflectors themselves relative to the rotation about the central axis (that is, relative to the relative orientation of the wind) and preferably also as a function of the rotation speed of the turbine.

Preferably, the tail of the deflector is spaced from the head of the wing to define a gap between the deflector and the wing. It should be noted that this solution allows air to flow between wing and deflector so as to generate a negative pressure and a relative lift force which increases the efficiency of the turbine.

In an example embodiment, the deflector extends longitudinally for a length less than the longitudinal length of the wing. This limits the effects of turbulence which might adversely affect the efficiency of the turbine during steady state operation.

In another example embodiment, the deflector extends longitudinally for a length equal to the longitudinal length of the wing. This allows increasing the torque for low rotation speeds.

Preferably, the aerofoil of the wing and of the deflector is biconvex. Still more preferably, the aerofoil of the wing and of the deflector is symmetrical. This solution is advantageous in terms of efficiency.

In an example not part of the invention, the at least one blade is movable towards and away from the central axis between an operating configuration and a folded configuration. In the operating configuration, the at least one blade is parallel to the central axis at a defined predetermined distance from the operating trajectory. In the folded configuration, the at least one blade is close to the supporting structure. Preferably, in the folded configuration, the at least one blade is juxtaposed with at least part of the supporting structure.

In an example not part of the invention, the at least one blade, in the folded configuration, is juxtaposed with the supporting arm and perpendicular to the central axis. Preferably, the at least one blade is movable by rotation about an axis perpendicular to the central axis to move between the operating configuration and the folded configuration.

In an example not part of the invention, the at least one blade, in the folded configuration, is juxtaposed with the supporting shaft and parallel to the central axis. Preferably, the at least one blade is configured to remain parallel to the central axis during movement between the operating configuration and the folded configuration. In an example embodiment, the at least one blade has a first end which is coupled to a first supporting arm and a second end which is coupled to a second supporting arm. The first and second supporting arms are movable by rotation about an axis perpendicular to the central axis to allow the at least one blade to move between the operating configuration and the folded configuration. Preferably, at least one of the supporting arms is connected to an actuator for opening and closing.

In practice, the supporting arms, a central shaft of the turbine (forming part of the supporting structure of the turbine) and the blade together define an articulated parallelogram.

Preferably, the turbine has (at least) a pair of opposed blades, each connected to the central shaft of the turbine by means of the articulated parallelogram.

Thus the actuator for opening and closing (which may be one for all the blades or one for each blade) allows opening and closing the turbine (that is to say, enables the blades, that is, the turbine to move between the operating configuration and the folded configuration) by acting on the articulated parallelograms.

The central shaft of the turbine has a first end which is connected to an electric generator and a second free end (opposite to the first end).

Preferably, the turbine closes upwards (that is, the blades move upwards from the operating configuration to the folded configuration). In other words, closing occurs by moving the blades along a trajectory having a longitudinal component oriented in the direction defined by a movement of the first end towards the second end of the central shaft (away from the first end). Opening, on the other hand, entails moving the blades towards the first end of the central shaft. For this purpose, the (at least one) actuator is configured (driven by the control unit responsible for automatically opening and closing the turbine) to move the articulated parallelograms in such a way as to move the blades away from or towards the first end of the central shaft, depending on whether the turbine is being closed or opened, respectively.

In an example not part of the invention, the turbine also comprises a protective shell (tubular, for example) adapted to house the supporting structure and the blades in the folded (closed) configuration.

In an example not part of the invention, the supporting structure (and the blades integral therewith) are movable longitudinally, that is to say, along the central axis, by translation. Preferably, the turbine also comprises an actuator configured to effect this movement of the supporting structure along the central axis. This actuator might be the same actuator responsible for folding the blades relative to the central shaft or it might be a separate actuator.

In that case, the supporting structure (and the blades integral therewith) are movable longitudinally between an extracted (operating) position, where the blades can be opened to allow the turbine to operate, and a retracted (rest) position, where the supporting structure (and the blades integral therewith) are inside the protective shell.

Preferably, the control unit of the turbine is programmed to drive the one or more actuators responsible for folding the blades and placing the structure and the blades into the protective shell, in such a way as to fold the blades and place them in the protective shell in a coordinated and sequential (and preferably fully automatic) manner.

Preferably, therefore, the turbine, by activating a control from the control unit, allows folding the blades against the central shaft and (by moving the supporting structure in a direction defined by a movement from the second to the first end of the supporting shaft) placing the structure and the blades in the protective shell, preferably fully retracted therein.

It should be noted that this solution allows reducing the overall dimensions of the turbine when not in use.

In an example embodiment, the supporting structure is articulated so as to allow the at least one blade to move towards and away from the central axis in order to modify the operating trajectory of the at least one blade. It should be noted that this solution allows varying the solidity of the turbine in order to optimize its operation based on wind strength.

In an example embodiment, the supporting structure is articulated so as to allow the at least one blade to rotate about an axis perpendicular to the longitudinal axis of the blade itself and to vary its tilt relative to the central axis. It should be noted that this solution allows modifying the profile of the turbine to have blades which are parallel to the central axis or which are tilted to varying degrees in order vary the equivalent surface swept by the turbine blades. Preferably, the at least one blade is configured to vary its extension in the longitudinal direction. In other words, the at least one blade is variable in longitudinal length. In an example embodiment the at least one blade has a first portion and a second portion slidably coupled to the first portion so as to translate along the longitudinal direction to vary the longitudinal length of the blade. Preferably, the at least one blade is a telescopic blade. This solution allows varying the equivalent surface swept by the turbine blades.

It should be noted that these solutions allow varying the solidity of the turbine in order to optimize its operation based on wind strength.

In an example embodiment, the turbine comprises a first and a second blade coupled to the supporting structure at diametrically opposed positions relative to the operating trajectory. Thus, the first and second blades form a pair of blades. Preferably, the turbine comprises at least one pair of (diametrically opposed) blades.

In an example embodiment, the first and second blades are operatively staggered along a longitudinal direction defined by the central axis, so that the first blade extends in a first direction more than in a second direction, while the second blade extends in the second direction more than in the first direction.

Preferably, the first and second blades respectively have a first and a second centre of mass, both lying on an axis intersecting the central axis and perpendicular thereto. It should be noted that this solution allows balancing the forces acting on the supporting structure during operation of the turbine. It should also be noted that this solution allows reducing the solidity of the turbine (compared to a two-blade turbine having two symmetrical blades), without reducing its reliability.

In an example embodiment, the turbine comprises a first and a second deflector associated with the first and the second blade, respectively. Each deflector has a head and a tail. Preferably, the tail of the first deflector is connected to the tail of the second deflector by means of a tie rod which links the rotation about the respective tilt axes. That way, the centrifugal forces acting on the first and second deflectors compensate each other and, during turbine operation, the orientation of the deflector is not affected by the centrifugal forces.

Also defined according to this description is a method for using a turbine for a vertical axis wind turbine generator, wherein the turbine has at least one blade, which is elongate in a longitudinal direction operatively parallel to a central axis and connected to a rotating supporting structure so as to rotate about the central axis along an operating trajectory, in a rotation direction, and wherein the at least one blade has a wing having an aerofoil defining a head and a tail, wherein the head leads the tail in the rotation direction. The method comprises the following steps:

- preparing a deflector having an aerofoil defining a head and a tail, wherein the head leads the tail in the rotation direction, located along the operating trajectory with its tail proximal to the head of the wing and oscillating about a tilt axis which is parallel to the central axis and passes through the head of the deflector;

- automatically orienting the deflector, by rotation about the tilt axis as a function of the angle of incidence of the wind and of the position of the blade along the operating trajectory.

It should be noted that in the method according to this description, the blade deflector (and this applies to each blade) moves from the first to the second angular end-of-stroke position and vice versa after each cycle (turn of the turbine), that is, after the turbine (hence the blade) turns full circle (360 degrees). The deflector therefore moves from the first to the second angular end-of-stroke position or vice versa at a frequency of twice per cycle.

In a preferred example embodiment, the turbine has at least one pair of diametrically opposed blades, each provided with a wing and a deflector.

It should be noted that at any instant the opposed deflectors (that is, the deflectors of the blades of the pair of opposed blades) are located at opposite angular end-of-stroke positions. For example, when the first deflector is at the first angular end-of-stroke position, the second deflector is at the second angular end-of-stroke position, whilst when the first deflector is at the second angular end-of-stroke position, the second deflector is at the first angular end-of-stroke position. This facilitates starting the turbine.

To guarantee this operation, at least for turbine rotation speeds lower than a reference limit value (that is, for low speeds or speeds suitable for correct turbine operation without the risk of breakdown), the effect of inertial (centrifugal) forces on the oscillation of the deflectors is cancelled. In effect, the inertial forces would tend to orient the deflectors with their tails displaced outwards, irrespective of the position of the blades along the reference trajectory around the central axis as a function of wind speed.

In other words, in the method according to this description, the deflectors are oriented as a function of relative wind orientation independently of the inertial forces. For this purpose, the tails of the deflectors might be directly connected or the deflectors might be configured in such a way that their centre of mass passes through the tilt axis.

In the case where the deflectors are equipped with a motor, it is the actuators connected to the deflectors which themselves make the oscillation of the deflectors independent of the inertial force but dependent only on the control logic of the actuators. Such control logic, in one example embodiment, is such as to reflect the above described operation with regard to synchronizing the orientation of the opposed deflectors.

In an example embodiment, the method comprises a step of moving the at least one blade between an operating configuration, where the at least one blade is parallel to the central axis at a defined predetermined distance from the central axis, and a folded configuration, where the at least one blade is close to the supporting structure.

In an example not part of the invention, the method comprises a step of varying a longitudinal length of the at least one blade.

Preferably, when the supporting structure comprises a supporting shaft and a supporting arm, the step of moving the at least one blade between the operating configuration and the folded configuration comprises one of the following steps, alternatively:

- juxtaposing the at least one blade with the supporting arm by rotation of the at least one blade about an axis perpendicular to the central axis;
- juxtaposing the at least one blade with the supporting shaft by rotation of the supporting arm about an axis perpendicular to the central axis;
- moving a second portion of the at least one blade relative to a first portion of the blade by translation along the longitudinal direction to vary the longitudinal length of the blade.

This description also provides a wind generator comprising a turbine having the above described features and an electric generator configured to convert rotational energy into electrical energy.

**Brief description of the drawings**

These and other features of the invention will become more apparent from the following detailed description of a preferred, non-limiting embodiment of it, with reference to the accompanying drawings, in which:

- Figure 1 shows a wind turbine according to this invention in a perspective view;
- Figure 1a is a perspective view showing a variant embodiment of the wind turbine of Figure 1;

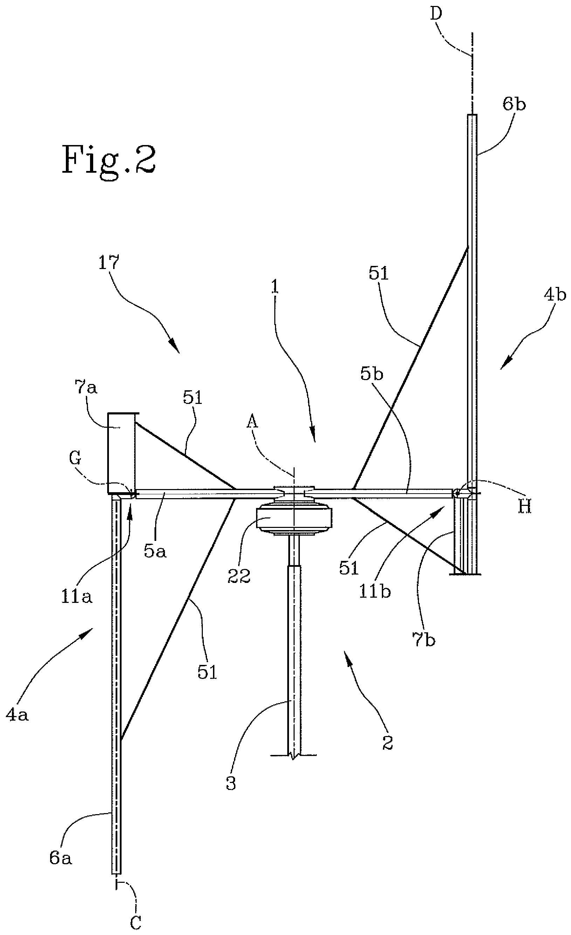

- Figure 2 shows the wind turbine of Figure 1 in a side view;
- Figure 3 schematically illustrates a cross section of the wind turbine of Figure 1, viewed from above, in four different angular operating positions and with some parts cut away in order to better illustrate others;

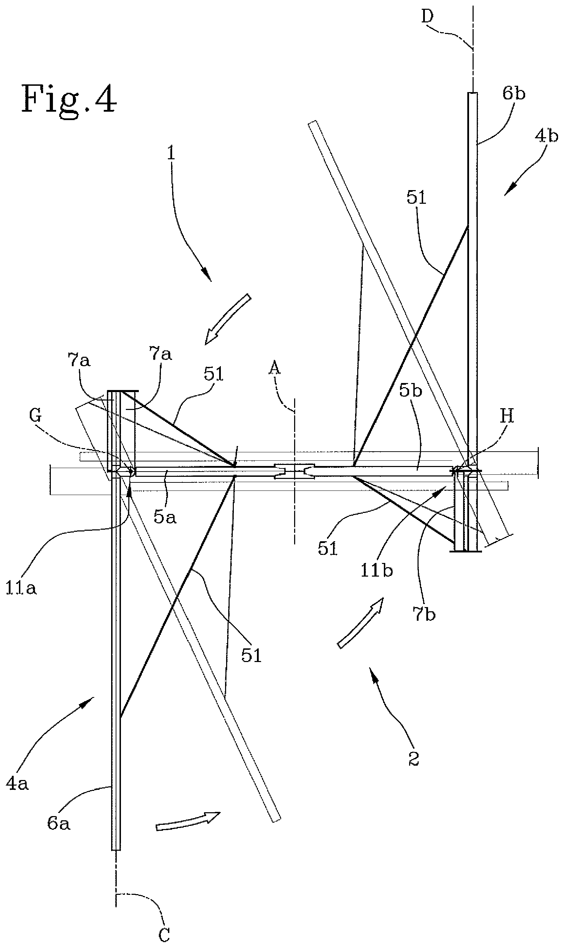

- Figure 4 is a side view showing a variant embodiment of the wind turbine of Figure 1 with the blades positioned at two mutually inclined operating positions;

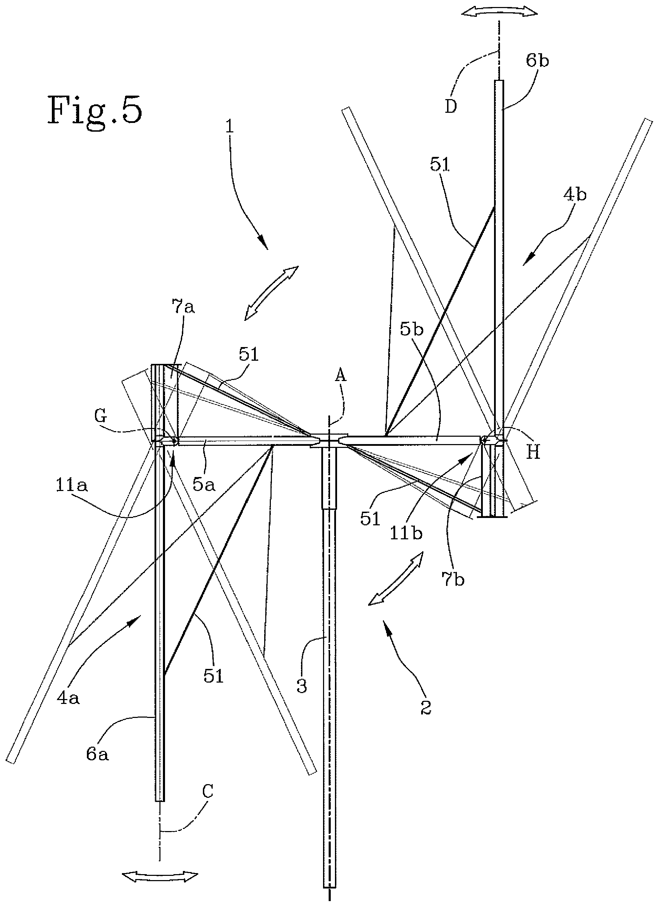

- Figure 5 shows a variant embodiment of the wind turbine of Figure 1 with the blades positioned at three mutually inclined operating positions;
- Figure 6 is a side view showing a variant example of a wind turbine not part of the invention;

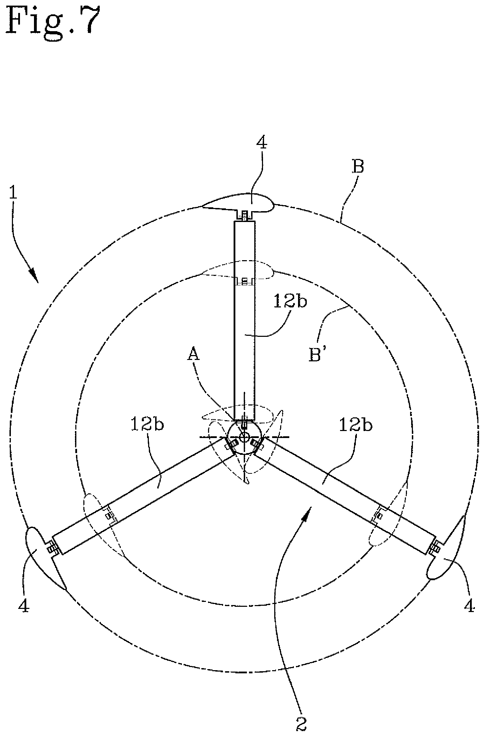

- Figure 7 shows the wind turbine of Figure 6 in a top view.

**Detailed description of preferred embodiments of the invention**

With reference to the accompanying drawings, the numeral 1 denotes a turbine for a vertical axis wind turbine generator 17 configured to convert the kinetic energy of a mass of moving air (that is, the kinetic energy of the wind) into mechanical energy, and more specifically, rotational energy. The turbine 1 according to the invention comprises a supporting structure 2 rotating about a central axis A. It should be noted that the turbine 1 of this description is a turbine of the VAWT type.

The central axis A may be spatially oriented in an arbitrary direction. Preferably, the central axis is directed vertically.

Preferably, the supporting structure 2 comprises a supporting shaft 3 and at least one supporting arm.

The turbine 1 comprises at least one blade 4 which is elongate in a longitudinal direction, operatively parallel to the central axis A, that is, parallel to the central axis A during the operation of the turbine 1.

In an example embodiment, the at least one blade 4 is curved. In other words, the turbine is a curved blade turbine. In such case, the longitudinal length of the blade 4 is defined by the extension of the blade 4 in a direction parallel to the central axis A.

In an example embodiment, the at least one blade 4 is configured to vary its extension in the longitudinal direction. In other words, the at least one blade 4 is variable in longitudinal length. In an example embodiment the at least one blade 4 has a first portion and a second portion slidably coupled to the first portion so as to translate along the longitudinal direction to vary the longitudinal length of the blade 4. Preferably, the at least one blade 4 is a telescopic blade.

The at least one blade 4 is connected to the supporting structure 2 to rotate about the central axis A along an operating trajectory B in a rotation direction. Preferably, the at least one blade 4 is connected to the supporting shaft 3 by the supporting arm.

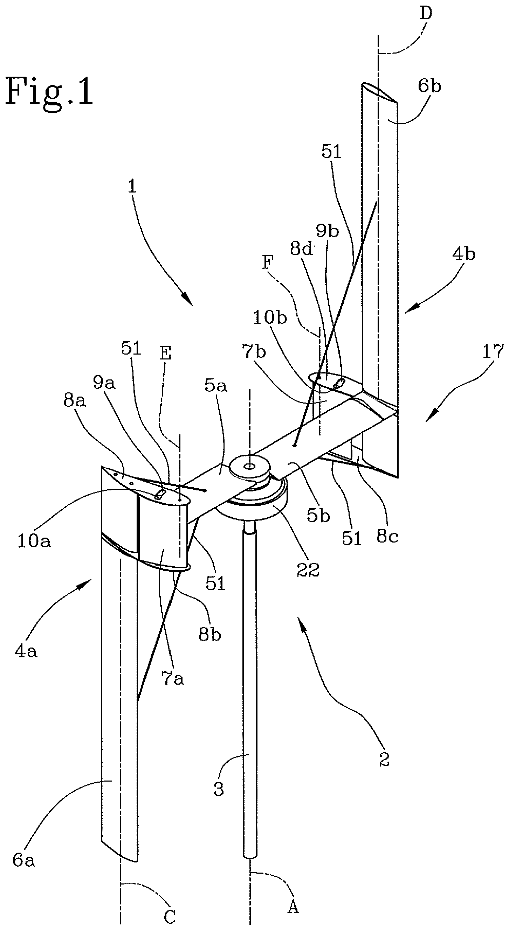

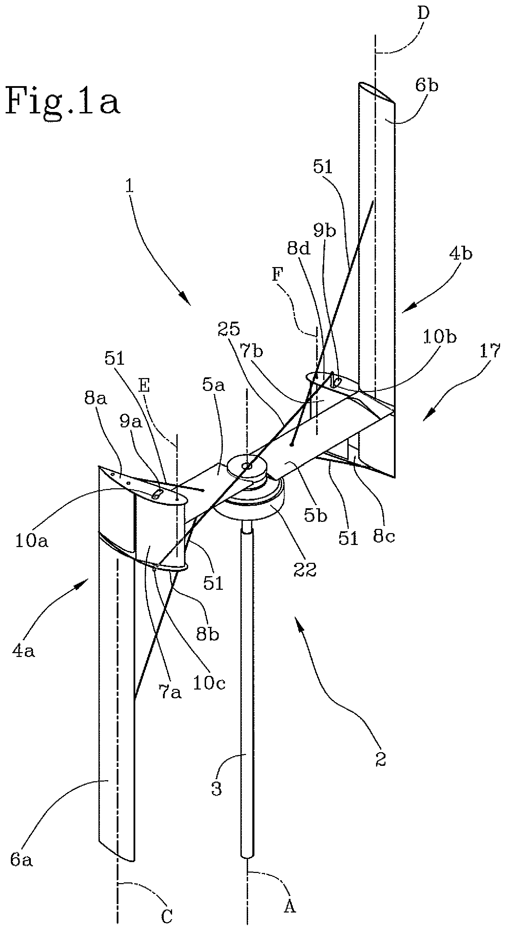

In the particular embodiment illustrated in Figure 1, the turbine 1 comprises a first elongate blade 4a, which extends in a first longitudinal direction C, and a second elongate blade 4b, which extends in a second longitudinal direction D. The first blade 4a and the second blade 4b are connected to the supporting shaft 3 by a first arm 5a and a second arm 5b, respectively. The first longitudinal direction C and the second longitudinal direction D are operatively parallel to the central axis A.

It should be noted that the blades are generically denoted by the numerals 4,4a,4b, depending on the embodiment.

Each blade 4a,4b comprises a wing. More specifically, the first blade 4a comprises a first wing 6a, and the second blade 4b comprises a second wing 6b. Each wing 6a,6b has an aerofoil defining a head and a tail, where the head leads the tail in the rotation direction.

In an example embodiment, the at least one blade 4 comprises a deflector having an aerofoil defining a head and a tail, where the head leads the tail in the rotation direction. The deflector is located along the operating trajectory B with its tail proximal to the head of the wing. The deflector is configured to oscillate about a tilt axis which passes through the head of the deflector and is perpendicular to a plane which an aerofoil of the deflector lies in. The tilt axis is parallel to the longitudinal direction of the blade 4.

In the particular embodiment illustrated in Figure 1, the first blade 4a comprises a first deflector 7a and the second blade 4b comprises a second deflector 7b. Each deflector 7a,7b has an aerofoil defining a head and a tail, where the head leads the tail in the rotation direction. Each deflector 7a,7b is located along the operating trajectory B with its tail proximal to the head of the respective wing 6a,6b. The first deflector 7a is configured to oscillate about a first tilt axis E, parallel to the first longitudinal direction C of the first blade 4a and passing through the head of the first deflector 7a. The second deflector 7b is configured to oscillate about a second tilt axis F, parallel to the second longitudinal direction D of the second blade 4b and passing through the head of the second deflector 7b.

The tail of the deflector 7a;7b is located forward of the head of the wing 6a;6b and leads it in the rotation direction along the operating trajectory B. In an example embodiment, the heads of the deflectors 7a,7b are located substantially on the operating trajectory defined by the heads of the wings 6a, 6b.

In an example embodiment, each deflector 7a,7b is idly pivoted on the supporting structure 2 so as to oscillate about the tilt axis E,F. Preferably, each deflector 7a,7b is oscillating about the respective tilt axis E,F between a first and a second predetermined angular end-of-stroke position.

To move between the respective angular end-of-stroke positions, each deflector 7a,7b rotates by an operating angle of between 5 and 35 degrees. Preferably, the operating angle is between 8 and 20 degrees. Still more preferably, the operating angle is between 10 and 15 degrees.

In the particular embodiment illustrated in Figure 1, the supporting structure 2 comprises a first supporting plate 8a and a second supporting plate 8b, both connected to the first wing 6a. More specifically, a first end of the first deflector 7a is pivoted to the first supporting plate 8a and a second end of the first deflector 7a is pivoted to the second supporting plate 8b.

The supporting structure 2 comprises a third supporting plate 8c and a fourth supporting plate 8d, both connected to the second wing 6b. More specifically, a first end of the second deflector 7b is pivoted to the third supporting plate 8c and a second end of the second deflector 7b is pivoted to the fourth supporting plate 8d.

Preferably, the first supporting plate 8a comprises a first guide 9a, configured to guide a first pin 10a of the first deflector 7a between the first and the second angular end-of-stroke position. The fourth supporting plate 8d comprises a second guide 9b, configured to guide a second pin 10b of the second deflector 7b between the first and the second angular end-of-stroke position.

Still more preferably, the second supporting plate 8b comprises a third guide (not illustrated) configured to guide a third pin 10c of the first deflector 7a between the first and the second angular end-of-stroke position. The third supporting plate 8c comprises a fourth guide (not illustrated) configured to guide a fourth pin (not illustrated) of the second deflector 7b between the first and the second angular end-of-stroke position.

In an example embodiment, the tail of the first deflector 7a is connected to the tail of the second deflector 7b by means of a synchronizing element 25 which links the rotation about the respective tilt axes E,F. In the particular embodiment illustrated in Figure 1a, the third pin 9c is connected to the second pin 9b by the synchronizing element 25.

The synchronizing element 25 constitutes a connecting element for connecting the two deflectors 7a, 7b; more specifically, to connect the tails of the two deflectors 7a, 7b.

The synchronizing (or connecting) element 25 has a predetermined, fixed length, at least for as long as it is subjected to tensile stresses below a predetermined value.

The synchronizing (or connecting) element 25 has a first end which is connected to the first deflector 7a and a second end which is connected to the second deflector 7b.

In one embodiment, the synchronizing (or connecting) element 25 has a resilient portion configured to cause elongation of the synchronizing (or connecting) element 25 when the latter is subjected to tensile stress greater than or equal to the predetermined value. The predetermined value corresponds to the tensile force generated by the inertial forces acting on the deflectors 7a, 7b when the turbine rotates at an angular speed equal to a reference limit value (exceeding which the turbine is at risk of breakdown or malfunctioning).

In an example embodiment, each deflector 7a, 7b is connected by elastic end-of-stroke elements to portions of the turbine which are stationary relative to the oscillation of the deflector 7a, 7b (but which rotate as one with the structure about the central axis A. For example, the elastic end-of-stroke elements may be connected between the head of the deflector and the wing or other stationary portion of the blade or to the supporting arm. Alternatively, if the synchronizing (or connecting) element 25 is provided, the elastic end-of-stroke elements may be connected between respective rigid portions of the synchronizing (or connecting) element 25 connected to corresponding deflectors 7a, 7b and one of the stationary parts.

The purpose of the elastic end-of-stroke elements is to keep the deflectors at rest at the position of alignment with the wing, limiting their rotation to the angular end-of-stroke positions and preventing noise which would otherwise be produced if the deflectors struck mechanical end-of-stroke elements.

Preferably, the first and the second deflector 7a,7b have a first and a second centre of mass located on the respective tilt axes E,F. In an example embodiment, each deflector 7a,7b comprises a first portion made of a first material (for example, a metallic material) and a second portion made of a second material (for example a polymeric material) having different densities. This solution allows balancing each deflector 7a,7b to bring the respective centres of mass onto the respective tilt axes E,F. Preferably, the tail of each deflector 7a,7b is spaced from the head of the respective wing 6a,6b to define a gap between the deflector and the wing. Preferably, each deflector 7a,7b extends longitudinally (that is, it extends in a direction parallel to the longitudinal direction C,D of the respective blade 4a,4b) for a length less than a longitudinal length of the respective wing 6a,6b.

Preferably, the aerofoil of each wing 6a,6b and of each deflector 7a,7b is biconvex. Still more preferably, the aerofoil of each wing 6a,6b and of each deflector 7a,7b is symmetrical.

It should be noted that in the particular embodiment illustrated in Figure 1, the first arm 5a and the second arm 5b have an aerofoil defining a head and a tail, where the head leads the tail in the rotation direction. The first arm 5a has a first end which is coupled to the supporting shaft 3 and a second end which is coupled to the first blade 4a, at the second supporting plate 8b. The second arm 5b has a first end which is coupled to the supporting shaft 3 and a second end which is coupled to the second blade 4b, at the fourth supporting plate 8d.

Preferably, each arm 5a,5b is also connected to the respective blade 4a,4b by at least one connecting element. Preferably, each arm 5a,5b is connected to the respective blade 4a,4b by a first connecting element and a second connecting element, located on opposite sides of the respective arm.

In an example embodiment, the connecting elements which connect the arm 5a,5b to the respective blade 4a,4b consist of a pair of tie rods 51 or stays.

Preferably, the tie rods 51 can be engaged and disengaged to allow the blade to rotate relative to the supporting arm so as to move into a folded configuration.

In another example embodiment, for each blade 4, at least one connecting element is rigid and variable in length. Preferably, the connecting element is a rod of adjustable length. For example, the connecting element of variable length may be a jack (operated hydraulically or electrically) or a cylinder and piston system or other known system.

Preferably, this connecting element of variable length constitutes the first connecting element, whilst the second connecting element is preferably a tie rod.

This allows adjusting blade tilt relative to the central axis, preferably steplessly.

Preferably, blade tilt can be varied by moving the elongate ends of the blades both towards the central axis (thus reducing the size of the wind window intercepted by the blades and increasing the solidity of the turbine) and away from the central axis (thus enlarging the wind window intercepted by the blades and reducing the solidity of the turbine).

This allows adapting the turbine to wind conditions.

In this context, the turbine provided by this invention is equipped with a control unit for automatically driving the connecting element of variable length as a function of wind strength measured by an anemometer (or as a function of other parameters, such as, for example, a load current for the wind generator).

Preferably, the first blade 4a and the second blade 4b are operatively staggered along a longitudinal direction defined by the central axis A, so that the first blade 4a extends in a first direction more than in a second direction, while the second blade 4b extends in the second direction more than in the first direction.

Preferably, the first blade 4a and the second blade 4b respectively have a first and a second centre of mass, both lying on an axis intersecting the central axis A and perpendicular thereto.

In an example embodiment, the first wing 6a has a first portion included between the first supporting plate 8a and the second supporting plate 8b and a second portion which extends in the aforesaid first direction. Preferably, the first portion of the first wing 6a extends in the first longitudinal direction C for a length less than a longitudinal length of the second portion of the first wing 6a.

The second wing 6b has a first portion included between the third supporting plate 8c and the fourth supporting plate 8d and a second portion which extends in the aforesaid second direction. Preferably, the first portion of the second wing 6b extends in the second longitudinal direction D for a length less than a longitudinal length of the second portion of the second wing 6b.

Preferably, the first portion of the first wing 6a and the first portion of the second wing 6b are made of material whose density is greater than the density of the respective second portions. That way the first and the second centre of mass of the blades 4a,4b lie on an axis intersecting the central axis A and perpendicular thereto.

In an example embodiment, the masses of first portion of the first wing 6a and of the first portion of the second wing 6b are concentrated in the proximity of the respective supporting plates. That way the first and the second centre of mass of the blades 4a,4b lie on an axis intersecting the central axis A and perpendicular thereto.

In an example embodiment, the at least one blade 4 is configured to vary its tilt relative to the central axis A using the centrifugal forces acting on the at least one blade 4 during operation of the turbine 1.

More specifically, a first end of the first blade 4a, proximal to a plane substantially perpendicular to the central axis A which the first arm 5a lies in, is connected to the supporting structure 2 by means of a first elastic element. A first end of the second blade 4b, proximal to a plane substantially perpendicular to the central axis A which the second arm 5b lies in, is connected to the supporting structure 2 by means of a second elastic element. During operation of the turbine 1, the centrifugal forces tend to move the first end of the first blade 4a and the first end of the second blade 4b away from the central axis A, while the first and second elastic elements generate forces which oppose this movement. That way, the tilt of the blades 4a,4b relative to the central axis is determined by the rotation speed of the turbine 1 and by the elastic modulus of the first and second elastic elements.

Described below is the operation of one particular embodiment of the turbine 1. This embodiment is illustrated in Figure 1. For brevity, the following description refers to the first blade 4a and to the behaviour of the first deflector 7a along the operating trajectory B. It should be borne in mind that the following description applies also to the second blade 4b and the second deflector 7b.

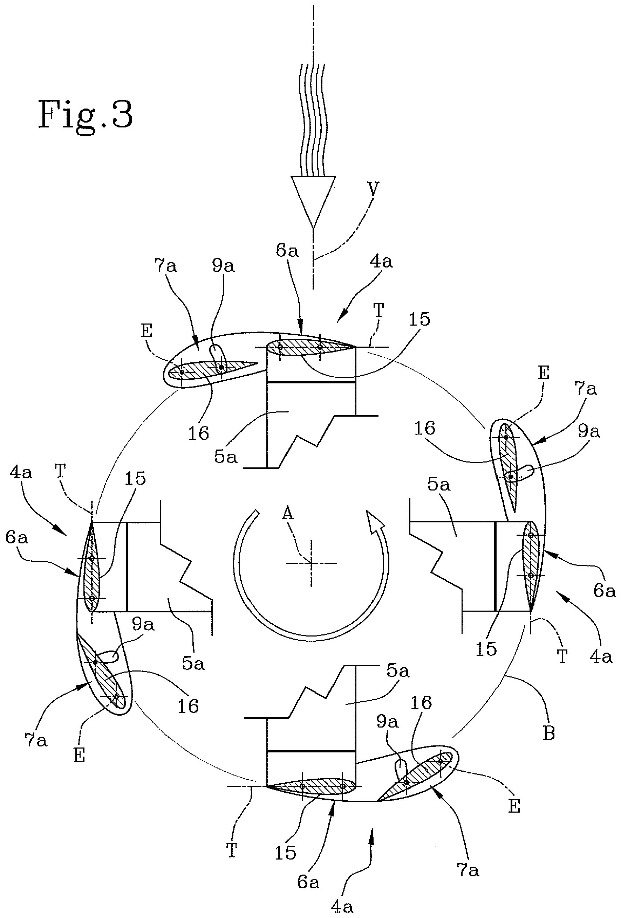

With reference to Figure 3, the reference character V denotes a direction of incidence of the wind. For simplicity, the incident direction V is constant during a movement of the first blade 4a along the operating trajectory B. Identifiable with reference to Figure 3 are an aerofoil of the first wing 6a (or first aerofoil 15) and an aerofoil of the first deflector 7a (or second aerofoil 16). The first aerofoil 15 comprises a head and a tail, defining a wing direction T, perpendicular to the longitudinal direction C. It should be noted that the wing direction T and the first longitudinal direction C define a plane which divides space into two half-spaces, so that the central axis A is included in a first half-space. It should be noted that the first tilt axis E is also included in the first half-space.

At a first angular position of the first blade 4a, where the wing direction T is parallel to the incident direction V and the head of the aerofoil 15 leads the tail in a direction indicated by the incident direction V, no lift forces are generated on the first wing 6a. The first deflector 7a is located at the first angular end-of-stroke position. Thus, the first deflector 7a is tilted relative to the incident direction V to generate lift forces which produce rotation of the first blade 4a about the central axis A along the operating trajectory B. It should be observed that when the deflector 7a is at the first angular end-of-stroke position, the tail of the deflector is located in a second half-space, relative to the first half-space containing the central axis A. At such first angular end-of-stroke position, the tail of the deflector is located on a cylindrical surface on the outside of the cylindrical reference surface in which the head of the wing is located.

At a second angular position of the first blade 4a, where the wing direction T is perpendicular to the incident direction V and the central axis A leads the first longitudinal direction C in the direction indicated by the incident direction V, lift forces are generated on the first wing 6a. The first deflector 7a is located at the first angular end-of-stroke position. The first deflector 7a is thus tilted relative to the incident direction V to divert an air flow which, as it passes the first aerofoil 15, creates a negative pressure which generates lift forces promoting rotation of the first blade 4a about the central axis A.

The first deflector 7a remains at the first angular end-of-stroke position until reaching a third angular position of the first blade 4a, where the wing direction T is parallel to the incident direction V and the head of the aerofoil 15 follows the tail in a direction indicated by the incident direction V. At the third angular position, no lift forces are generated on the first wing 6a. When the third angular position is reached, the first deflector 7a moves to the second angular end-of-stroke position. Thus, the first deflector 7a is tilted relative to the incident direction V to generate lift forces which produce rotation of the first blade 4a about the central axis A. It should be observed that when the deflector 7a is at the second angular end-of-stroke position, the tail of the deflector is located in the first half-space containing the central axis A. At the second angular end-of-stroke position, the tail of the deflector is located on a cylindrical surface on the inside of the cylindrical reference surface in which the head of the wing is located.

At a fourth angular position of the first blade 4a, where the wing direction T is perpendicular to the incident direction V and the first longitudinal direction C leads the central axis A in the direction indicated by the incident direction V, lift forces are generated on the first wing 6a. The first deflector 7a remains at the second angular end-of-stroke position. The first deflector 7a is thus tilted relative to the incident direction V to divert an air flow which, as it passes the first aerofoil 15, creates a negative pressure which generates lift forces promoting rotation of the first blade 4a about the central axis A along the operating trajectory B. The first deflector 7a remains at the second angular end-of-stroke position until reaching the first angular position of the first blade 4a.

In an example not part of the invention, the at least one blade 4 is movable towards and away from the central axis A between an operating configuration and a folded configuration. In the operating configuration, the at least one blade 4 is parallel to the central axis A at a defined predetermined distance from the operating trajectory B. In the folded configuration, the at least one blade 4 is close to the supporting structure 2. Preferably, in the folded configuration, the at least one blade 4 is juxtaposed with at least part of the supporting structure 2.

In an example not part of the invention, the at least one blade 4, in the folded configuration, is juxtaposed with the supporting arm and perpendicular to the central axis A. Preferably, the at least one blade 4 is movable by rotation about an axis perpendicular to the central axis to move between the operating configuration and the folded configuration.

In the particular embodiment illustrated in Figure 1, the first blade 4a is coupled to the second end of the first arm 5a by means of a first hinge 11a, making it movable by rotation about a first folding axis G perpendicular to the central axis A so as to move between the operating configuration, where the first longitudinal direction C is parallel to the central axis A, and the folded configuration, where the first longitudinal direction C is perpendicular to the central axis A. The second blade 4b is coupled to the second end of the second arm 5b by means of a second hinge 11b, making it movable by rotation about a second folding axis H perpendicular to the central axis A so as to move between the operating configuration, where the second longitudinal direction D is parallel to the central axis A, and the folded configuration, where the second longitudinal direction D is perpendicular to the central axis A.

In an example not part of the invention, the at least one blade 4, in the folded configuration, is juxtaposed with the supporting shaft 3 and parallel to the central axis A. Preferably, the at least one blade 4 is configured to remain parallel to the central axis A during movement between the operating configuration and the folded configuration.

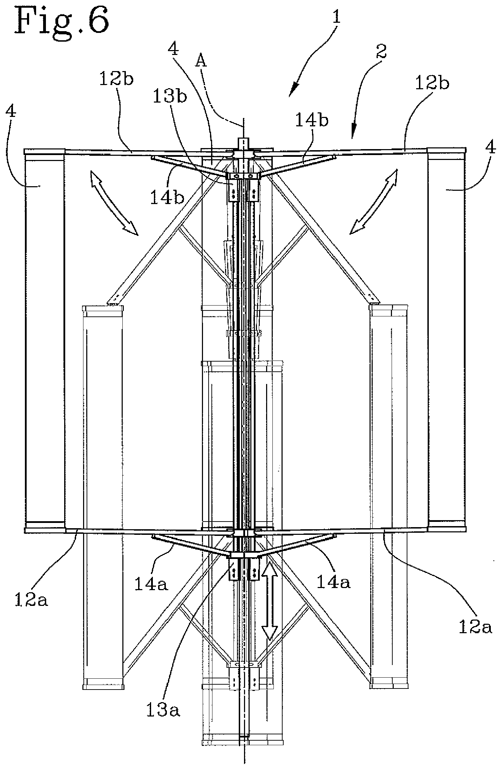

In the particular embodiment illustrated in Figure 6, each blade 4 has a first end and a second end which are coupled, respectively to a first supporting rod 12a and a second supporting rod 12b. The coupling is preferably accomplished by hinges enabling the supporting rods and the respective blades to rotate mutually.

A second end of the first supporting rod 12a is coupled to the supporting shaft 3. A second end of the second supporting rod 12b is coupled to the supporting shaft 3. The coupling is preferably accomplished by hinges enabling the supporting rods to rotate relative to the supporting shaft 3.

A first movement element 13a is slidably coupled to the supporting shaft 3. The first movement element 13a is connected to the first supporting rod 12a by means of a first connecting rib 14a. A second movement element 13b is slidably coupled to the supporting shaft 3. The second movement element 13b is connected to the first supporting rod 12b by means of a second connecting rib 14b.

Moving the movement elements 13a,13b in the longitudinal direction defined by the central axis A causes rotation of the supporting rods 12a,12b about respective axes of rotation perpendicular to the central axis A. More specifically, a movement of the movement elements 13a,13b in a first direction causes each blade 4 of the turbine 1 to move closer to the supporting shaft 3 (that is, a movement of each blade 4 towards the folded configuration). A movement of the movement elements 13a,13b in a second direction causes each blade 4 of the turbine 1 to move away from the supporting shaft 3 (that is, a movement of each blade 4 towards the operating configuration). It should be noted that during movement between the operating configuration and the folded configuration, each blade 4 remains parallel to the central axis A. Preferably, the first and second movement elements 13a,13b are movable along the supporting shaft 3 between a first and a second end-of-stroke position, corresponding to the operating configuration and the folded configuration of the blades.

In an example embodiment, the supporting structure is articulated so as to allow the at least one blade 4 to move towards and away from the central axis A in order to modify the operating trajectory B of the at least one blade 4. In an example not part of the invention, the movement elements 13a,13b respectively comprise a first and a second locking mechanism (not illustrated) configured to adopt an active configuration, where they prevent movement of the respective movement element, and a passive configuration, where they allow the respective movement element to move in the longitudinal direction defined by the central axis A. Preferably, the first and second locking mechanisms are configured to adopt the active configuration at the end-of-stroke positions of the respective movement elements. Still more preferably, the first and second locking mechanisms are configured to adopt the active configuration at intermediate positions between the end-of-stroke positions of the respective movement elements. That way, the operating trajectory B can be modified (for example, reducing its diameter to define a new trajectory B').

This description provides a turbine for a vertical axis wind turbine generator, comprising:

- a supporting structure rotating about a central axis and having a supporting shaft and at least one supporting arm;
- at least one blade (elongate in a longitudinal direction parallel to the central axis) and connected to the supporting shaft by the supporting arm to rotate about the central axis along an operating trajectory in a rotation direction.

In an example embodiment, the turbine comprises two opposed blades; in another example embodiment, it comprises three or more blades (for example, a plurality of pairs of opposed blades).

The blade (or blades) is (or are) movable towards and away from the central axis between an operating configuration, where the at least one blade is parallel to the central axis at a predetermined defined distance from the operating trajectory, and a folded configuration, where the at least one blade is close to the supporting structure.

Further, preferably, the supporting structure and the blades with it (preferably in the folded configuration) are movable by translation along the central axis and are retracted into a protective shell. For this purpose, the turbine comprises an actuator which allows the supporting structure and the blades to be automatically retracted into the shell.

In an example embodiment, each blade might (in this case, not necessarily) comprise a fixed wing and an oscillating deflector (having one or more of the features described above).

This description also provides a wind generator 17 comprising a turbine 1 having the above described features and an electric generator configured to convert rotational energy into electrical energy.

Also defined according to this description is a method for using a turbine 1 for a vertical axis wind turbine generator 17, wherein the turbine 1 has at least one blade 4, which is elongate in a longitudinal direction operatively parallel to a central axis A and connected to a rotating supporting structure so as to rotate about the central axis A along an operating trajectory B, in a rotation direction, and wherein the at least one blade 4 has a wing having an aerofoil defining a head and a tail, where the head leads the tail in the rotation direction. The method comprises the following steps:

- preparing a deflector having an aerofoil defining a head and a tail, wherein the head leads the tail in the rotation direction, located along the operating trajectory B with its tail proximal to the head of the wing and oscillating about a tilt axis which is parallel to the central axis and passes through the head of the deflector;
- automatically orienting the deflector, by rotation about the tilt axis as a function of the angle of incidence V of the wind and of the position of the blade 4 along the operating trajectory B.

In an example not part of the invention, the method comprises a step of moving the at least one blade 4 between an operating configuration, where the at least one blade 4 is parallel to the central axis A at a defined predetermined distance from the central axis A, and a folded configuration, where the at least one blade 4 is close to the supporting structure 2.

In an example embodiment, the method comprises a step of varying a longitudinal length of the at least one blade 4.

Preferably, when the supporting structure 2 comprises a supporting shaft 3 and a supporting arm, the step of moving the at least one blade 4 between the operating configuration and the folded configuration comprises one of the following steps, alternatively:

- juxtaposing the at least one blade 4 with the supporting arm by rotation of the at least one blade 4 about an axis perpendicular to the central axis A;
- juxtaposing the at least one blade 4 with the supporting shaft 3 by rotation of the supporting arm about an axis perpendicular to the central axis A;
- moving a second portion of the at least one blade 4 relative to a first portion of the blade 4 by translation along the longitudinal direction to vary the longitudinal length of the blade 4.

**Claims**

1. A turbine (1) for a vertical axis wind turbine generator (17), comprising:

   - a supporting structure (2) rotating about a central axis (A);
   - at least two blades (4a;4b), which are elongated in a longitudinal direction (C; D), operatively parallel to the central axis (A) and connected to the supporting structure (2) so as to rotate about the central axis (A) along an operating trajectory (B), in a rotation direction, wherein the at least two blades (4a;4b), have a wing (6a;6b) having an aerofoil defining a head and a tail, wherein the head leads the tail in the rotation direction, wherein the at least two blades (4a;4b) comprise a deflector (7a; 7b) having an aerofoil defining a head and a tail, wherein the head leads the tail in the rotation direction, and positioned along the operating trajectory (B) with its tail proximal to the head of the wing (6a; 6b), wherein the deflector (7a; 7b) is configured to oscillate about a tilt axis (E;F) which is parallel to the longitudinal axis (C; D) of the blades (4a;4b) and passes through the head of the deflector (7a; 7b), **characterized in that** said blades comprise a first blade and a second blade (4a,4b), coupled to the supporting structure (2) at diametrically opposite positions relative to the operating trajectory (B), wherein the first blade and the second blade (4a, 4b) respectively comprise a first and a second deflector (7a, 7b), each having a head and a tail, and the tail of the first deflector (7a) is connected to the tail of the second deflector (7b) by a connecting element configured to synchronize the rotation of the first deflector and second deflector (7a, 7b) about the respective tilting axes (E, F).

2. The turbine (1) according to claim 1 , wherein the deflector (7a; 7b) is idly pivoted on the supporting structure (2) so as to oscillate about the tilt axis (E; F).

3. The turbine (1) according to claim 1 or 2, wherein the deflector (7a;7b) oscillates about the tilt axis (E;F) between a first and a second predetermined angular end-of-stroke position, wherein the head of the wing (6a;6b) is movable along the operating trajectory (B) and wherein the tail of the deflector (7a;7b), at the first angular end-of-stroke position, is located on a cylindrical surface outside the cylindrical reference surface and, at the second angular end-of-stroke position, is located on a cylindrical surface inside the cylindrical reference surface.

4. The turbine (1) according to any one of the preceding claims, wherein the centre of mass of the deflector (7a; 7b) is positioned on the tilt axis (E;F).

5. The turbine (1) according to any one of the preceding claims, wherein the tail of the deflector (7a;7b) is spaced from the head of the wing (6a; 6b) so as to define a gap between the deflector (7a;7b) and the wing (6a;6b).

6. The turbine (1) according to any one of the preceding claims, wherein the deflector (7a;7b) extends longitudinally for a length that is smaller than a longitudinal length of the wing (6a;6b).

7. The turbine (1) according to claim 1, wherein the first and second blades (4a, 4b) are operatively staggered along a longitudinal direction defined by the central axis (A), so that the first blade (4a) extends in a first longitudinal direction more than in a second longitudinal direction, while the second blade (4b) extends in the second longitudinal direction more than in the first longitudinal direction.

8. The turbine (1) according to claim 7, wherein the first and second blades (4a, 4b) respectively have a first and a second centre of mass lying on an axis intersecting the central axis (A) and perpendicular thereto.

9. The turbine (1) according to claim 1, wherein the first blade (4a) and the second blade (4b) are mobile in rotation between an operating configuration, in which they are oriented parallel to the central axis (A), and a folded configuration, in which they are oriented in a perpendicular direction to the central axis (A).

10. The turbine (1) according to claim 1 , comprising at least one constraining element operating on the first and second deflectors (7a, 7b) to make the oscillation thereof about the respective tilting axes (E, F) independent of inertial forces acting on the deflectors themselves, at least for turbine rotation speed values which are lower than a reference limit value.

11. The turbine (1) according to claim 10, wherein the constraining element comprises a connecting element having a first end connected to the tail of the first deflector (7a) and a second end connected to the tail of the second deflector (7b), wherein the connecting element is inextensible, at least for tensile forces acting on the connecting element which are lower than a reference limit value.

12. The turbine (1) according to claim 11, wherein the connecting element has an elastic part configured to produce elongation of the connecting element, only for values of tensile forces acting on the connecting element which are higher than the reference value, wherein the reference value for the tensile force corresponds to the tensile force developed by the inertial forces acting on the deflectors (7a, 7b) upon rotation of the turbine at the reference limit speed.

13. A method for using a turbine (1) for a vertical axis wind turbine generator (17) as in at least claim 1, wherein the method comprises the following steps:

- preparing a deflector (7a;7b) having an aerofoil defining a head and a tail, wherein the head leads the tail in the rotation direction, positioned along the operating trajectory (B) with its tail proximal to the head of the wing (6a;6b) and oscillating about a tilt axis (E;F) which is parallel to the longitudinal axis (C;D) of the blades (4a;4b) and passes through the head of the deflector (7a;7b);
- automatically orienting the deflector (7a;7b), by rotation about the tilt axis (E; F) as a function of the angle of incidence of the wind and the position of the blades (4a;4b) along the operating trajectory (B), wherein the turbine has a first blade and a second blade (4a, 4b), coupled to the supporting structure (2) at diametrically opposite positions relative to the operating trajectory (B), wherein the first blade and the second blade (4a, 4b) respectively comprise a first deflector and a second deflector (7a, 7b), each having a head and a tail,

the method being **characterized by** the step of connecting the tail of the first deflector (7a) to the tail of the second deflector (7b) by a connecting element so as to synchronize the rotation of the first deflector and second deflector (7a, 7b) about the respective tilting axes (E, F).

14. The method according to claim 13, wherein the method comprises cancelling, for each deflector (7a,7b), the effect of inertial forces acting on the deflector (7a, 7b) itself relative to deflector oscillation about the respective tilt axis (E, F) in order to make the oscillation of the deflectors (7a, 7b) about the respective tilt axes (E, F) independent of the inertial forces acting on the deflectors themselves, at least for turbine rotation speed values which are lower than a reference limit value.

15. The method according to claim 13 , wherein each deflector (7a;7b) oscillates about the tilt axis (E;F) between a first and a second predetermined angular end-of-stroke position and wherein the method comprises a step of synchronizing the oscillation of the deflectors (7a, 7b) about the respective tilt axes (E, F) so that when the first deflector (7a) is at a first angular end-of-stroke position, the second deflector (7a) is at a second angular end-of-stroke position and vice versa.

**Patentansprüche**

1. Turbine (1) für einen Windturbinengenerator (17) mit vertikaler Achse, umfassend:

   - eine Stützstruktur (2), die um eine Mittelachse (A) dreht;
   - mindestens zwei Blätter (4a; 4b), die in einer Längsrichtung (C; D) länglich, betriebsbereit parallel zur Mittelachse (A) und mit der Stützstruktur (2) verbunden sind, um entlang einer Betriebstrajektorie (B) um die Mittelachse (A) zu drehen, wobei die zumindest zwei Blätter (4a; 4b) einen Flügel (6a; 6b) mit einer Tragfläche haben, die einen Kopf und einen Schwanz definiert, wobei der Kopf den Schwanz in der Drehrichtung führt, wobei die zumindest zwei Blätter (4a; 4b) einen Deflektor (7a; 7b) mit einer Tragfläche, die einen Kopf und einen Schwanz definiert, wobei der Kopf den Schwanz in der Drehrichtung führt, und positioniert entlang der Betriebstrajektorie (B) mit seinem Schwanz nahe dem Kopf des Flügels (6a 6b), umfassen. wobei der Deflektor (7a; 7b) gestaltet ist, um eine Neigungsachse (E, F) zu schwingen, die parallel zur Längsachse (C; D) der Blätter (4a; 4b) ist und durch den Kopf des Deflektors (7a; 7b) verläuft,

   **dadurch gekennzeichnet, dass** die Blätter ein erstes Blatt und ein zweites Blatt (4a, 4b) umfassen, die an die Stützstruktur (2) an diametral entgegengesetzten Positionen relativ zur Betriebstrajektorie (B) gekoppelt sind, wobei das erste Blatt und das zweite Blatt (4a, 4b) einen ersten und einen zweiten Deflektor (7a, 7b) umfassen, die jeweils einen Kopf und einen Schwanz aufweisen und der Schwanz des ersten Deflektors (7a) mit dem Schwanz des zweiten Deflektors (7b) durch ein Verbindungselement verbunden ist, das gestaltet ist, die Drehung des ersten Deflektors und zweiten Deflektors (7a, 7b) um die entsprechenden Neigungsachsen (E, F) zu synchronisieren.

2. Turbine (1) nach Anspruch 1, wobei der Deflektor (7a; 7b) im Leerlauf auf der Stützstruktur (2) geschwenkt wird, um um die Neigungsachse (E; F) zu schwingen.

3. Turbine (1) nach Anspruch 1 oder 2, wobei der Deflektor (7a; 7b) um die Neigungsachse (E; F) zwischen einer ersten und einer zweiten vorbestimmten Hubende-Winkelposition schwingt, wobei der Kopf des Flügels (6a; 6b) entlang der Betriebstrajektorie (B) beweglich ist und wobei der Schwanz des Deflektors (7a; 7b) an der ersten Hubende-Winkelposition auf einer zylindrischen Oberfläche außerhalb der zylindrischen Referenzfläche gelegen ist und in der zweiten Hubende-Winkelposition auf einer zylindrischen Oberfläche innerhalb der zylindrischen Referenzfläche gelegen ist.

4. Turbine (1) nach einem der vorstehenden Ansprüche, wobei der Massenschwerpunkt des Deflektors (7a; 7b) auf der Neigungsachse (E; F) positioniert ist.

5. Turbine (1) nach einem der vorstehenden Ansprüche, wobei das Ende des Deflektors (7a; 7b) vom Kopf des Flügels (6a; 6b) beabstandet ist, um so einen Spalt zwischen dem Deflektor (7a; 7b) und dem Flügel (6a; 6b) zu definieren.

6. Turbine (1) nach einem der vorstehenden Ansprüche, wobei sich der Deflektor (7a; 7b) in Längsrichtung über eine Länge erstreckt, die kleiner als eine Längslänge des Flügels (6a; 6b) ist.

7. Turbine (1) nach Anspruch 1, wobei das erste und zweite Blatt (4a, 4b) betriebsbereit entlang einer Längsrichtung versetzt sind, die durch die Mittelachse (A) definiert ist, sodass sich das erste Blatt (4a) in einer ersten Längsrichtung weiter als in einer zweiten Längsrichtung erstreckt, während sich das zweite Blatt (4b) in der zweiten Längsrichtung weiter als in der ersten Längsrichtung erstreckt.

8. Turbine (1) nach Anspruch 7, wobei das erste und zweite Blatt (4a, 4b) einen ersten bzw. einen zweiten Massenschwerpunkt haben, der auf einer Achse liegt, die die Mittelachse (A) schneidet und senkrecht zu dieser ist.

9. Turbine (1) nach Anspruch 1, wobei das erste Blatt (4a) und das zweite Blatt (4b) in einer Drehung zwischen einer Betriebskonfiguration, in der sie parallel zur Mittelachse (A) orientiert sind, und einer gefalteten Konfiguration, in der sie in einer senkrechten Richtung zur Mittelachse (A) orientiert sind, mobil sind.

10. Turbine (1) nach Anspruch 1, umfassend zumindest ein Begrenzungselement, das auf den ersten und zweiten Deflektor (7a, 7b) wirkt, um dessen Schwingen um die entsprechende Neigungsachse (E, F) von Trägheitskräften unabhängig zu machen, die auf die Deflektoren selbst wirken, zumindest für Turbinendrehzahlwerte, die niedriger als ein Referenzgrenzwert sind.

11. Turbine (1) nach Anspruch 10, wobei das Begrenzungselement ein Verbindungselement, mit einem ersten Ende, das mit dem Schwanz des ersten Deflektors (7a) verbunden ist, und mit einem zweiten Ende, das mit dem Schwanz des zweiten Deflektors (7b) verbunden ist, umfasst, wobei das Verbindungselement nicht verlängerbar ist, zumindest für Zugkräfte, die auf das Verbindungselement wirken, die niedriger sind als ein Referenzgrenzwert.

12. Turbine (1) nach Anspruch 11, wobei das Verbindungselement ein elastisches Teil hat, das gestaltet ist, eine Verlängerung des Verbindungselements nur für Werte von Zugkräften, die auf das Verbindungselement wirken, die höher als der Referenzwert sind, zu produzieren, wobei der Referenzwert für die Zugkraft der Zugkraft entspricht, die durch die Trägheitskräfte entwickelt wird, die auf die Deflektoren (7a, 7b) bei Drehung der Turbine bei der Referenzgrenzdrehzahl wirken

13. Verfahren zum Verwenden einer Turbine (1) für einen Windturbinengenerator (17) mit vertikaler Achse wie zumindest in Anspruch 1, wobei das Verfahren die folgenden Schritte umfasst:

  - Herstellen eines Deflektors (7a; 7b) mit einer Tragfläche, die einen Kopf und einen Schwanz definiert, wobei der Kopf den Schwanz in der Drehrichtung führt, positioniert entlang der Betriebstrajektorie (B) mit seinem Schwanz nahe dem Kopf des Flügels (6a; 6b) und um eine Neigungsachse (E; F) schwingend, die parallel zur Längsachse (C; D) der Blätter (4a; 4b) ist und durch den Kopf des Deflektors (7a; 7b) verläuft,
  - automatisches Orientieren des Deflektors (7a; 7b) durch Drehen um die Neigungsachse (E; f) als Funktion des Einfallswinkels des Windes und der Position der Blätter (4a; 4b) entlang der Betriebstrajektorie (B), wobei die Turbine ein erstes und ein zweites Blatt (4a, 4b) hat, die an die Stützstruktur (2) an diametral entgegengesetzten Positionen relativ zur Betriebstrajektorie (B) gekoppelt sind, wobei das erste Blatt und das zweite Blatt (4a, 4b) einen ersten bzw. einen zweiten Deflektor (7a, 7b) umfassen, die jeweils einen Kopf und einen Schwanz aufweisen,

  wobei das Verfahren **gekennzeichnet ist durch** den Schritt zum Verbinden des Schwanzes des ersten Deflektors (7a) mit dem Schwanz des zweiten Deflektors (7b) durch ein Verbindungselement, um so die Drehung des ersten Deflektors und zweiten Deflektors (7a, 7b) um die entsprechenden Neigungsachsen (E, F) zu synchronisieren.

14. Verfahren nach Anspruch 13, wobei das Verfahren ein Aufheben, für jeden Deflektor (7a, 7b) der Wirkung von Trägheitskräften, die auf den Deflektor (7a, 7b) wirken, relativ zu einer Deflektorschwingung um die entsprechende Neigungsachse (E, F) umfasst, um die Schwingung der Deflektoren (7a, 7b) um die entsprechende Neigungsachse (E, F) von Trägheitskräften unabhängig zu machen, die auf die Deflektoren selbst wirken, zumindest für Turbinendrehzahlwerte, die niedriger als ein Referenzgrenzwert sind.

15. Verfahren nach Anspruch 13, wobei jeder Deflektor (7a; 7b) um die Neigungsachse (E; F) zwischen einer ersten und einer zweiten vorbestimmten Hubende-Winkelposition schwingt und wobei das Verfahren einen Schritt zum Synchronisieren der Schwingung der Deflektoren (7a, 7b) um die entsprechende Neigungsachse (E, F) umfasst, sodass, wenn sich der erste Deflektor (7a) bei einer ersten Hubende-Winkelposition befindet, der zweite Deflektor (7a) bei einer zweiten Hubende-Winkelposition ist und umgekehrt.

**Revendications**

1. Turbine (1) pour un générateur éolien à axe vertical (17), comprenant :

  - une structure de support (2) tournant autour d'un axe central (A) ;
  - au moins deux pales (4a ; 4b), qui sont allongées dans une direction longitudinale (C ; D), fonctionnellement parallèles à l'axe central (A) et raccordées à la structure de support (2) de façon à tourner autour de l'axe central (A) le long d'une trajectoire de fonctionnement (B), dans un sens de rotation, dans laquelle les au moins deux pales (4a ; 4b) ont une aile (6a ; 6b) ayant un profil aérodynamique définissant une tête et une queue, dans laquelle la tête mène la queue dans le sens de rotation, dans laquelle les au moins deux pales (4a ; 4b) comprennent un déflecteur (7a ; 7b) ayant un profil aérodynamique définissant une tête et une queue, dans laquelle la tête mène la queue dans le sens de rotation, et positionné le long de la trajectoire de fonctionnement (B) avec sa queue à proximité de la tête de l'aile (6a ; 6b), dans laquelle le déflecteur (7a ; 7b) est configuré pour osciller autour d'un axe d'inclinaison (E ; F) qui est parallèle à l'axe longitudinal (C ; D) des pales (4a ; 4b) et passe par la tête du déflecteur (7a ; 7b),

  **caractérisée en ce que** lesdites pales comprennent une première pale et une seconde pale (4a, 4b), couplées à la structure de support (2) à des positions diamétralement opposées par rapport à la trajectoire de fonctionnement (B), dans laquelle la première pale et la seconde pale (4a, 4b) comprennent respectivement un premier et un second déflecteur (7a ; 7b), ayant chacun une tête et une queue, et la queue du premier déflecteur (7a) est raccordée à la queue du second déflecteur (7b) par un élément de raccordement configuré pour synchroniser la rotation du premier déflecteur et du second déflecteur (7a, 7b) autour des axes d'inclinaison (E, F) respectifs.

2. Turbine (1) selon la revendication 1, dans laquelle le déflecteur (7a ; 7b) pivote au repos sur la structure de support (2) de façon à osciller autour de l'axe d'inclinaison (E ; F).

3. Turbine (1) selon la revendication 1 ou 2, dans laquelle le déflecteur (7a ; 7b) oscille autour de l'axe d'inclinaison (E ; F) entre une première et une seconde position de fin de course angulaires prédéterminées, dans laquelle la tête de l'aile (6a ; 6b) peut se déplacer le long de la trajectoire de fonctionnement (B) et dans laquelle la queue du déflecteur (7a ; 7b), à la première position de fin de course angulaire, est située sur une surface cylindrique à l'extérieur de la surface de référence cylindrique et, à la seconde position de fin de course angulaire, est située sur une surface cylindrique à l'intérieur de la surface de référence cylindrique.

4. Turbine (1) selon l'une quelconque des revendications précédentes, dans laquelle le centre de masse du déflecteur (7a ; 7b) est positionné sur l'axe d'inclinaison (E ; F).

5. Turbine (1) selon l'une quelconque des revendications précédentes, dans laquelle la queue du déflecteur (7a ; 7b) est espacée de la tête de l'aile (6a ; 6b) de façon à définir un écartement entre le déflecteur (7a ; 7b) et l'aile (6a ; 6b).

6. Turbine (1) selon l'une quelconque des revendications précédentes, dans laquelle le déflecteur (7a ; 7b) s'étend longitudinalement sur une longueur qui est plus petite qu'une longueur longitudinale de l'aile (6a ; 6b).

7. Turbine (1) selon la revendication 1, dans laquelle les première et seconde pales (4a, 4b) sont fonctionnellement en quinconce le long d'une direction longitudinale définie par l'axe central (A), de sorte que la première pale (4a) s'étende dans une première direction longitudinale plus que dans une seconde direction longitudinale, alors que la seconde pale (4b) s'étend dans la seconde direction longitudinale plus que dans la première direction longitudinale.

8. Turbine (1) selon la revendication 7, dans laquelle les première et seconde pales (4a, 4b) ont respectivement un premier et un second centre de masse se situant sur un axe croisant l'axe central (A) et perpendiculaire à ce dernier.

9. Turbine (1) selon la revendication 1, dans laquelle la première pale (4a) et la seconde pale (4b) sont mobiles en rotation entre une configuration de fonctionnement, dans laquelle elles sont orientées parallèles à l'axe central (A), et une configuration pliée, dans laquelle elles sont orientées dans une direction perpendiculaire à l'axe central (A).

10. Turbine (1) selon la revendication 1, comprenant au moins un élément de contrainte agissant sur les premier et second déflecteurs (7a, 7b) pour en rendre l'oscillation autour des axes d'inclinaison (E, F) respectifs indépendants de forces d'inertie agissant sur les déflecteurs eux-mêmes, au moins pour des valeurs de vitesse de rotation de turbine qui sont inférieures à une valeur limite de référence.

11. Turbine (1) selon la revendication 10, dans laquelle l'élément de contrainte comprend un élément de raccordement ayant une première extrémité raccordée à la queue du premier déflecteur (7a) et une seconde extrémité raccordée à la queue du second déflecteur (7b), dans laquelle l'élément de raccordement est inextensible, au moins pour des forces de traction agissant sur l'élément de raccordement qui sont inférieures à une valeur limite de référence.

12. Turbine (1) selon la revendication 11, dans laquelle l'élément de raccordement a une partie élastique configurée pour produire un allongement de l'élément de raccordement, uniquement pour des valeurs de forces de traction agissant sur l'élément de raccordement qui sont supérieures à la valeur de référence, dans laquelle la valeur de référence pour la force de traction correspond à la force de traction développée par les forces d'inertie agissant sur les déflecteurs (7a, 7b) lors d'une rotation de la turbine à la vitesse limite de référence.

13. Procédé d'utilisation d'une turbine (1) pour un générateur éolien à axe vertical (17) selon au moins la revendication 1, dans lequel le procédé comprend les étapes suivantes :

   - la préparation d'un déflecteur (7a ; 7b) ayant un profil aérodynamique définissant une tête et une queue, dans lequel la tête mène la queue dans le sens de rotation, positionné le long de la trajectoire de fonctionnement (B) avec sa queue à proximité de la tête de l'aile (6a ; 6b) et oscillant autour d'un axe d'inclinaison (E ; F) qui est parallèle à l'axe longitudinal (C ; D) des pales (4a ; 4b) et passe par la tête du déflecteur (7a ; 7b) ;

   - l'orientation automatique du déflecteur (7a ; 7b), par rotation autour de l'axe d'inclinaison (E ; F) en fonction de l'angle d'incidence du vent et de la position des pales (4a ; 4b) le long de la trajectoire de fonctionnement (B), dans lequel la turbine a une première pale et une seconde pale (4a, 4b), couplées à la structure de support (2) à des positions diamétralement opposées par rapport à la trajectoire de fonctionnement (B), dans lequel la première pale et la seconde pale (4a, 4b) comprennent respectivement un premier déflecteur et un second déflecteur (7a, 7b), ayant chacun une tête et une queue,

le procédé étant **caractérisé par** l'étape de raccordement de la queue du premier déflecteur (7a) à la queue du second déflecteur (7b) par un élément de raccordement de façon à synchroniser la rotation du premier déflecteur et du second déflecteur (7a, 7b) autour des axes d'inclinaison (E, F) respectifs.

**14.** Procédé selon la revendication 13, dans lequel le procédé comprend l'annulation, pour chaque déflecteur (7a, 7b), de l'effet de forces d'inertie agissant sur le déflecteur (7a, 7b) lui-même par rapport à une oscillation de déflecteur autour de l'axe d'inclinaison (E, F) respectif afin de rendre l'oscillation des déflecteurs (7a, 7b) autour des axes d'inclinaison (E, F) respectifs indépendante des forces d'inertie agissant sur les déflecteurs eux-mêmes, au moins pour des valeurs de vitesse de rotation de turbine qui sont inférieures à une valeur limite de référence.

**15.** Procédé selon la revendication 13, dans lequel chaque déflecteur (7a ; 7b) tourne autour de l'axe d'inclinaison (E ; F) entre une première et une seconde position de fin de course angulaires prédéterminées et dans lequel le procédé comprend une étape de synchronisation de l'oscillation des déflecteurs (7a, 7b) autour des axes d'inclinaison (E ; F) respectifs, de sorte que, lorsque le premier déflecteur (7a) est à une première position de fin de course angulaire, le second déflecteur (7a) soit à une seconde position de fin de course angulaire et vice versa.

# Fig.1

# Fig.1a

Fig.2

# Fig.3

# Fig.4

# Fig.5

Fig.6

# Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011078451 A
- WO 2011150171 A
- WO 2013136660 A
- EP 2623774 A2
- AT 10992 U1
- US 2012243990 A1
- US 2008095608 A1
- EP 1681463 A1
- GB 2427003 A
- WO 2011105970 A1